# FASCICULE DE BREVET EUROPEEN

(11) **EP 3 452 359 B1**
(45) Date de publication et mention de la délivrance du brevet: **03.05.2023**
(21) Numéro de dépôt: 17716580.0
(22) Date de dépôt: 24.03.2017
(51) Int. Cl.: B62D 1/18, B62D 1/187, B62D 1/189

(54) **INTERFACE DE MONTAGE D'UNE COLONNE DE DIRECTION ET PROCEDE DE MONTAGE ASSOCIE**
SCHNITTSTELLE ZUR MONTAGE EINER LENKSÄULE UND ZUGEHÖRIGES MONTAGEVERFAHREN
INTERFACE FOR MOUNTING A STEERING COLUMN AND ASSOCIATED MOUNTING METHOD

(30) Priorité: 03.05.2016 FR 1653976
(43) Date de publication de la demande: 13.03.2019
(73) Titulaire: Renault s.a.s, 92100 Boulogne Billancourt (FR)
(72) Inventeur: PEAN, Frederic, 92100 BOULOGNE BILLANCOURT (FR); BATAILLE, Alain, 75015 PARIS (FR)
(74) Mandataire: Renault Group
(86) Numéro de dépôt international: PCT/FR2017/050687
(87) Numéro de publication internationale: WO 2017/191376

(56) Documents cités:
- EP-A1- 2 611 672
- FR-A1- 2 702 725
- JP-A- 2009 298 176
- US-A1- 2004 169 364
- US-B1- 6 443 491

## Description

L'invention a pour objet les procédés d'assemblage de colonnes, notamment de colonnes de direction ou de transmission de couple, sur des bâtis, et notamment sur des éléments transversaux tels que les traverses de postes de conduite automobile.

L'invention concerne les procédés d'assemblage d'une portion de colonne telle qu'une colonne de direction de véhicule automobile, et plus particulièrement l'assemblage d'une portion sensiblement rectiligne de la colonne, que cette portion soit solidaire ou non d'autres portions non parallèles à la première portion.

Par colonne on entend ici un organe de transmission d'un couple ou d'un mouvement de rotation, la transmission se faisant au moyen d'arbres mobiles en rotation par rapport à un boîtier extérieur de la colonne. La colonne peut comprendre plusieurs arbres non parallèles reliés par exemple par des systèmes de transmission tels que des engrenages, de manière à transmettre un couple ou un mouvement de rotation à partir d'une première extrémité de la colonne, et le transformer en couple ou en mouvement de rotation à une autre extrémité de la colonne, le couple ou le mouvement de rotation à cette autre extrémité étant appliqué autour d'un axe différent de l'axe du premier couple / du premier élément de rotation.

Ces procédés de montage comportent généralement une étape au cours de laquelle un opérateur, éventuellement aidé par un bras manipulateur robotisé, vient placer la colonne dans une position idoine pour permettre de fixer fermement au moins deux points de fixation reliant la colonne et un support -par exemple un support de type traverse de véhicule automobile-.

En pratique l'opérateur se trouve généralement positionné face à un poste de montage et trouve face à la traverse. L'opérateur doit manipuler la colonne en la maintenant sous la traverse et en arrière de celle-ci, car c'est là qu'elle doit être assemblée. La visibilité comme la liberté de mouvement de l'opérateur se trouve alors limités par la traverse placée devant lui.

Dans certains modes opératoires, la colonne est configurée de manière à pouvoir être accrochée à la traverse au niveau d'un premier point de la colonne qui se trouve à proximité de l'opérateur, avant d'accrocher ou de fixer un autre point de la colonne plus distant de l'opérateur que le premier point.

La suspension de la colonne en configuration de pré assemblage au niveau du premier point, permet généralement de garder quelques degrés de liberté de mouvement afin de déplacer la colonne suivant au moins une direction de translation et de l'incliner autour d'au moins un axe horizontal. Cette étape de préassemblage permet de faire supporter l'essentiel du poids de la colonne à la traverse, ou à un autre support destiné à relier la colonne et un bâti fixe ou une caisse de véhicule. L'étape de préassemblage permet ensuite d'ajuster la position d'une seconde extrémité de la colonne, afin de venir positionner cette seconde extrémité dans une position où des points d'assemblage de la colonne coïncident avec leur position souhaitée pour le montage final de la colonne.

Bien qu'une partie du poids de la colonne soit soutenue au niveau du premier point de préassemblage, une partie du poids de la colonne doit encore être soutenue par l'opérateur ou par le bras manipulateur, et l'inertie de la colonne rend délicate la recherche de la position idoine finale d'assemblage, d'autant plus que le second point de pré maintien de la colonne se trouve généralement masqué à la vue de l'opérateur.

Le document US20040169364A1 est l'art antérieur le plus proche des revendications 1 et 9, et décrit un ensemble de colonne de direction d'un véhicule et son support de colonne, ledit support étant configuré pour être assemblé à une traverse du véhicule avec des moyens de prémaintien.

L'invention a pour but de proposer un procédé de montage de colonne, notamment de colonne de direction de véhicule automobile, permettant de limiter les phases de tâtonnement de l'opérateur lors du positionnement du second point de prémaintien de la colonne.

A cette fin il est proposé un ensemble de colonne et de support colonne, notamment pour colonne de direction de véhicule automobile. Le support est configuré pour être assemblé à une traverse et comprend un dispositif de glissière et un dispositif de retenue situé à distance du dispositif de glissière. La colonne comprend un corps et une extrémité de centrage. L'ensemble comprend :
- un dispositif de suspension configuré pour suspendre la colonne à une glissière du dispositif de glissière de manière à pouvoir incliner l'axe de la colonne autour d'un axe horizontal,
- une ouverture sur le dispositif de retenue, configurée pour y insérer, sensiblement suivant la direction de la glissière, une portion de l'extrémité de centrage de la colonne, l'ouverture étant limitée d'un premier côté par un bord d'appui configuré pour soutenir une partie du poids de la colonne et retenir la colonne dans une première position d'inclinaison, une fois la portion d'extrémité de centrage insérée dans l'ouverture.

Le dispositif de retenue comprend sur un second côté de l'ouverture diamétralement opposé au premier côté, un rebord de butée s'étendant en avant de l'ouverture en direction de la glissière, de manière à former une butée pour l'extrémité de centrage lors de variations d'inclinaison de la colonne avant l'insertion de l'extrémité de centrage dans l'ouverture.

Plus généralement, l'un parmi l'extrémité de centrage et le dispositif de retenue comprend un ergot, et l'autre parmi l'extrémité de centrage et le dispositif de retenue comprend une fenêtre ou un logement percée d'une ouverture, l'ouverture étant limitée d'un premier côté par un bord d'appui configuré pour soutenir une partie du poids de la colonne et retenir la colonne dans une première position d'inclinaison, une fois l'ergot inséré dans l'ouverture.

L'ouverture ou le logement comprend sur un second côté de l'ouverture diamétralement opposé au premier côté, un rebord de butée s'étendant en avant de l'ouverture en sens inverse de la direction d'insertion de l'ergot, de manière à former une butée pour l'ergot lors de variations d'inclinaison de la colonne avant l'insertion de l'ergot dans l'ouverture.

L'extrémité de centrage de la colonne et le dispositif de retenue sont en outre configurés pour autoriser à la colonne suspendue, une plage d'angles d'inclinaison telle que l'ergot peut passer devant l'ouverture sur toute la hauteur de l'ouverture, et peut passer au-delà du bord d'appui, jusqu'à au moins une seconde position d'inclinaison. La seconde position d'inclinaison est angulairement plus éloignée de la première position d'inclinaison, que n'est éloignée de la première position d'inclinaison, la position où l'ergot butte angulairement contre le rebord de butée.

Autrement dit, l'extrémité de centrage, l'ouverture et le rebord de butée sont configurés pour permettre à partir de la première position angulaire, une amplitude d'inclinaison de la colonne vers le bas, du côté de son extrémité de centrage, qui est supérieure au débattement angulaire autorisé vers le haut.

Selon certaines variantes de réalisation, l'ouverture peut être ménagée sur l'extrémité de centrage de la colonne et l'ergot peut se trouver sur le dispositif de retenue du support, assemblé de manière fixe par rapport à la traverse. Selon d'autres variantes de réalisation, l'ouverture peut être ménagée sur le dispositif de retenue et être fixe par rapport à la traverse, et l'ergot peut se trouver sur l'extrémité de centrage de la colonne.

Typiquement, lorsque l'ergot est ménagé sur une portion support solidaire de la traverse, et l'ouverture est ménagée sur la colonne, le rebord de butée se trouve en dessous du bord d'appui. Lorsque l'ergot est sur la colonne et l'ouverture est sur un support solidaire de la traverse, le rebord de butée se trouve au dessus du bord d'appui.

Selon certaines variantes de réalisation, le rebord de butée peut être un simple bord de butée linéaire situé en avant du bord d'appui -suivant la direction et le sens d'insertion de l'ergot- par exemple si l'ouverture est oblique par rapport à la verticale.

On peut noter que réciproquement, la traverse, le support et la colonne sont conçus de manière à permettre, à partir d'une position où l'ergot est angulairement en butée contre le rebord de butée, d'incliner la colonne vers le bas du côté de son extrémité de centrage jusqu'à amener l'ergot en dessous du bord d'appui.

Par inclinaison on entend ici une inclinaison de la colonne autour d'un axe horizontal transversal au véhicule.

Cette configuration de l'ensemble traverse, support et colonne permet à un opérateur situé face à la colonne, du côté opposé à l'extrémité de centrage de celle-ci, d'amener à l'aveugle l'extrémité de centrage de la colonne sous le rebord de butée, puis en remontant l'extrémité de centrage, de toucher en butée angulaire le rebord de butée avec l'ergot, et à partir de cette position de butée angulaire, d'avancer l'ergot pour l'insérer directement dans l'ouverture, en étant guidé par la contacte entre l'ergot et le rebord de butée.

La direction de la glissière est de préférence comprise dans un plan vertical, qui, une fois la traverse montée sur véhicule, contient la direction d'avancement du véhicule.

L'extrémité de centrage de la colonne n'est pas nécessairement une extrémité de la colonne : la colonne peut se poursuivre axialement au-delà de l'extrémité de centrage, que ce soit dans la continuité d'une première portion de colonne, ou avec un changement de direction de la colonne au voisinage de l'extrémité de centrage.

La configuration dans laquelle la colonne peut être déplacée suspendue sous la traverse suivant une direction de la glissière, et peut être inclinée de manière variable autour d'un axe horizontal, peut être appelée configuration de pré montage, car elle correspond à une configuration intermédiaire du montage de la colonne, avant un assemblage plus rigide de la colonne sur la traverse.

Par traverse on entend ici un support rigide permettant de relier de manière rigide le support colonne et une structure, telle qu'une caisse de véhicule. La traverse peut être une traverse de poste de conduite de véhicule automobile. Le support peut être typiquement assemblé à une région de la traverse située entre les extrémités de la traverse, sur une portion de la traverse s'étendant au moins en partie suivant une direction horizontale ou oblique. Le support peut être situé à distance à la fois d'une première et d'une seconde extrémité de la traverse.

Par colonne on entend un élément structurel ou mécanique s'étendant axialement suivant une direction représentant sensiblement un axe d'inertie de la colonne. Selon un mode de réalisation avantageux, la colonne peut être un organe apte à transmettre un couple et/out un mouvement de rotation autour d'un axe de rotation s'étendant sensiblement parallèlement à un axe d'inertie d'au moins un élément constitutif de la colonne. De manière avantageuse, le dispositif de glissière permet de suspendre la colonne sous la traverse dans une position où la colonne est orientée sensiblement perpendiculairement à la traverse. La colonne peut par exemple comprendre une première portion axiale représentant un arbre supérieur haut de colonne à l'intérieur duquel pivote l'axe du volant, et qui est suspendue à la glissière. La colonne peut se poursuivre axialement par un arbre inférieur haut de colonne situé dans la continuité axiale de l'arbre supérieur haut de colonne, à l'intérieur duquel se trouve un mécanisme de démultiplication, et qui comprend l'extrémité de centrage. La colonne peut ensuite se poursuivre vers les roues du véhicule par un arbre intermédiaire reliant le mécanisme de démultiplication et le différentiel actionnant les roues. Un moteur d'assistance à la direction peut être par exemple fixé sur l'arbre inférieur de haut de colonne. Dans cette configuration, le poids total de la colonne est plus élevé, et le centre de gravité de la colonne est plus proche du dispositif de retenue que du dispositif de suspension. Il est donc particulièrement important, pour l'ergonomie du poste de travail de l'opérateur qui soulève l'extrémité de centrage de la colonne en vue de l'accrochage de cette extrémité au dispositif de suspension, que la position d'insertion de l'ergot dans l'ouverture soit trouvée rapidement, alors justement que l'opérateur ne peut voir l'extrémité de centrage.

L'ouverture peut être limitée par deux contours latéraux diamétralement opposés l'un à l'autre suivant une direction horizontale, et limitant les débattements angulaires de la colonne autour d'un axe vertical une fois l'ergot inséré dans l'ouverture.

L'extrémité de centrage de la colonne peut comprendre un ergot, et l'ensemble peut être configuré de manière à ce que, pour au moins une position de butée angulaire de l'ergot contre le rebord de butée, l'ergot se trouve dans l'alignement de l'ouverture suivant la direction de la glissière. Ainsi, une fois cette position de butée angulaire atteinte, un opérateur peut aisément insérer à l'aveugle l'ergot dans l'ouverture.

L'ensemble peut avantageusement être configuré de manière à ce que pour toutes les positions suspendues de la colonne dans lesquelles l'ergot est en butée angulaire contre le rebord de butée, au moins une portion de l'ergot se trouve dans l'alignement de l'ouverture suivant la direction de la glissière.

Selon un autre mode de réalisation, l'extrémité de centrage de la colonne peut comprendre un ergot, l'ensemble étant configuré de manière à ce que, pour toutes les positions de la colonne dans lesquelles l'ergot se trouve en butée angulaire contre le rebord de butée, le rebord de butée comporte une portion de surface entre la zone de butée et l'ouverture, apte à guider l'ergot vers l'ouverture suivant une trajectoire plane et se rapprochant continûment de l'ouverture suivant la direction de la glissière. Autrement dit, en parcourant cette portion de surface entre la zone de butée et l'ouverture, l'ergot ne parcourt pas de portions de trajectoires l'éloignant, même temporairement, de l'ouverture suivant la direction de la glissière. L'ergot est guidé vers l'ouverture même si au moment de la butée angulaire l'ergot ne se trouve pas l'alignement de l'ouverture suivant la direction de la glissière.

Avantageusement, l'extrémité de centrage de la colonne comporte à la base de l'ergot une portion élargie configuré pour bloquer l'avancement de la colonne suivant la direction de la glissière une fois l'ergot inséré dans l'ouverture. La portion élargie peut être positionnée de manière à ce que la position de la colonne en butée au niveau de son extrémité de centrage corresponde à une position de mise en place d'éléments de fixation de la colonne non encore assemblés à ce stade.

De manière préférentielle, l'ouverture peut comporter un deuxième rebord s'étendant radialement à l'extérieur du bord d'appui, le deuxième rebord présentant au moins une direction perpendiculaire ou transversale à la direction de la glissière. Par radialement, on entend ici suivant une direction sensiblement perpendiculaire ou du moins oblique par rapport à la direction d'insertion de l'ergot. La direction d'insertion de l'ergot s'entend comme la direction tangentielle au déplacement de l'ergot au moment de son entrée au travers de l'ouverture, l'ergot étant alors en butée angulaire contre le rebord de butée.

Le deuxième rebord offre ainsi une surface de butée à l'avancement de la colonne par translation. Le deuxième rebord peut de préférence comporter une portion de plan sensiblement perpendiculaire à la direction de la glissière, voire être entièrement compris dans une telle portion de plan.

Par une portion de plan sensiblement perpendiculaire à la direction de la glissière, on entend une portion de plan dont la normale avec l'axe de la glissière forme un angle aigu de valeur inférieure à 30°, et de préférence de valeur inférieure à 20°, avantageusement inférieure à 10°.

Selon un mode de réalisation, à partir du bord d'appui, le deuxième rebord peut s'étendre d'abord dans un plan sensiblement perpendiculaire à la direction de la glissière, puis s'étendre suivant une direction de plan inclinée, ou davantage inclinée, vers l'arrière, dans le sens d'insertion de l'ergot.

Le dispositif de glissière peut comporter une fente ménagée sur l'un parmi le support et la colonne, et comporter un élément d'accrochage complémentaire de la fente, sur l'autre parmi le support et la colonne, l'élément d'accrochage étant configuré pour pouvoir pivoter au niveau de son contact avec les bords de fente, autour d'un axe horizontal perpendiculaire à la fente.

Avantageusement, l'ensemble comprend en outre des éléments de fixation complémentaires permettant d'immobiliser la colonne par rapport au support une fois l'ergot inséré dans l'ouverture. Selon un mode de réalisation avantageux, la fente/la glissière est placée en position montée de la traverse dans le véhicule, dans un plan vertical comprenant la direction d'avancement du véhicule. La fente/glissière et l'élément d'accrochage sont de préférence configurés pour permettre également un déplacement en translation de la colonne par rapport à la traverse en cas de rupture des éléments de fixation complémentaires.

La fente peut comporter une zone d'insertion élargie permettant d'y introduire verticalement l'élément d'accrochage à partir d'une position où la colonne est indépendante du support. La fente peut également comporter une butée de fin de course configurée pour limiter les mouvements de translation de la colonne dans la direction de rapprochement de l'extrémité de centrage vers le dispositif de retenue.

Selon un mode de réalisation avantageux, la position de la butée de fin de course de la fente est configurée pour que la colonne en butée de fin de course dans la fente, puisse par inclinaison autour d'un axe horizontal, venir en butée d'inclinaison par contact de l'ergot et du rebord de butée.

Selon un autre mode de réalisation, la fente comporte une butée de fin de couse apte à arrêter la colonne en butée en translation dans la direction opposée à la direction d'insertion de l'ergot. La position de la butée de fin de course peut être alors choisie pour que, à partir de cette position de butée, on puisse incliner la colonne jusqu'à ce qu'une extrémité de la colonne vienne angulairement en butée avec le rebord de butée.

Il est également proposé un procédé d'assemblage d'une colonne sur un support, la colonne comprenant un corps et une extrémité de centrage, le support comprenant un dispositif de glissière sensiblement horizontale, et un dispositif de retenue distant du dispositif de glissière, le procédé d'assemblage comprenant les étapes suivantes :
- on accroche la colonne au support par le dispositif de glissière, de manière à ce que la mobilité de la colonne suspendue autorise une translation de la colonne par rapport au support, et autorise une inclinaison de la colonne autour d'un axe horizontal perpendiculaire à la direction de la glissière,
- on incline la colonne en soulevant l'extrémité de centrage de la colonne, jusqu'à ce que l'extrémité de centrage de la colonne vienne angulairement en butée avec une avancée du dispositif de retenue,
- à partir de la position précédente de butée angulaire, on imprime une translation à la colonne le long de la glissière en maintenant un contact glissant entre l'extrémité de centrage de la colonne et l'avancée du dispositif de retenue, jusqu'à ce qu'une portion de l'extrémité de centrage de la colonne soit insérée dans une ouverture du dispositif de retenue,
- on pose sous l'effet du poids de la colonne l'extrémité de centrage de la colonne sur un bord d'appui de l'ouverture.

On peut ensuite relâcher la colonne, en position auto-équilibrée entre son point d'appui sur le bord d'appui et son point d'accroche au niveau du dispositif de glissière.

Avantageusement, on vient ensuite assembler des moyens de fixation supplémentaires pour immobiliser la colonne par rapport à au support, par exemple au voisinage ou au niveau du dispositif de glissière, et/ou au niveau du dispositif de suspension.

Le dispositif de glissière est typiquement assemblé sur un tube de traverse de poste de conduite. Le dispositif de suspension est typiquement assemblé à un tirant inférieur de baie perpendiculaire à la traverse.

Avantageusement, après l'insertion de l'ergot dans l'ouverture, la colonne est immobilisée par rapport à la traverse par au moins un premier moyen de fixation comportant des éléments de liaison pour relier la colonne et le support de part et d'autre de la fente/glissière. Ce premier moyen de fixation peut être configuré pour venir plaquer une portion plane de l'enveloppe de la colonne avec une portion plane du support, de manière à bloquer la colonne à la fois en translation, en inclinaison, et en rotation autour de l'axe de la colonne. Avantageusement, après l'insertion de l'ergot dans l'ouverture, la colonne est en outre immobilisée par rapport à la traverse par au moins un deuxième moyen de fixation venant en prise avec une platine définissant l'ouverture et venant en prise avec une pièce d'extrémité de la colonne portant l'ergot.

La platine définissant l'ouverture est de préférence montée sur un tirant de la traverse s'étendant à distance de l'axe d'inertie de la traverse et permettant de solidariser la traverse à un tablier de véhicule.

A l'issue du montage, l'extrémité de centrage de la traverse est donc solidarisée avec un point du tirant distant de l'axe d'inertie de la traverse, ce qui améliore le comportement vibratoire de la colonne.

Quelques buts, caractéristiques et avantages de l'invention apparaîtront à la lecture de la description suivante, donnée uniquement à titre d'exemple non limitatif, et faite en référence aux dessins annexés sur les quels :
- la figure 1 est une vue schématique d'une colonne de direction selon l'invention, en position de pré montage par rapport à une traverse à l'aide d'un support selon l'invention;
- la figure 2 est une vue en perspective de certains éléments du support de la figure 1;
- la figure 3 est une vue en perspective des éléments de support de la figure 2 en position de réassemblage, ainsi que de quelques autres éléments de support de la figure 1;
- la figure 4 est une vue simplifiée en coupe d'une portion d'une première variante d'élément de support selon l'invention ;
- la figure 5 est une vue en coupe simplifiée en coupe d'une portion d'une autre variante d'élément de support selon l'invention;
- la figure 6 est une vue en coupe simplifiée en coupe d'une portion d'une autre variante d'élément de support selon l'invention;
- la figure 7 est une vue en coupe simplifiée en coupe d'une portion d'une autre variante d'élément de support selon l'invention.

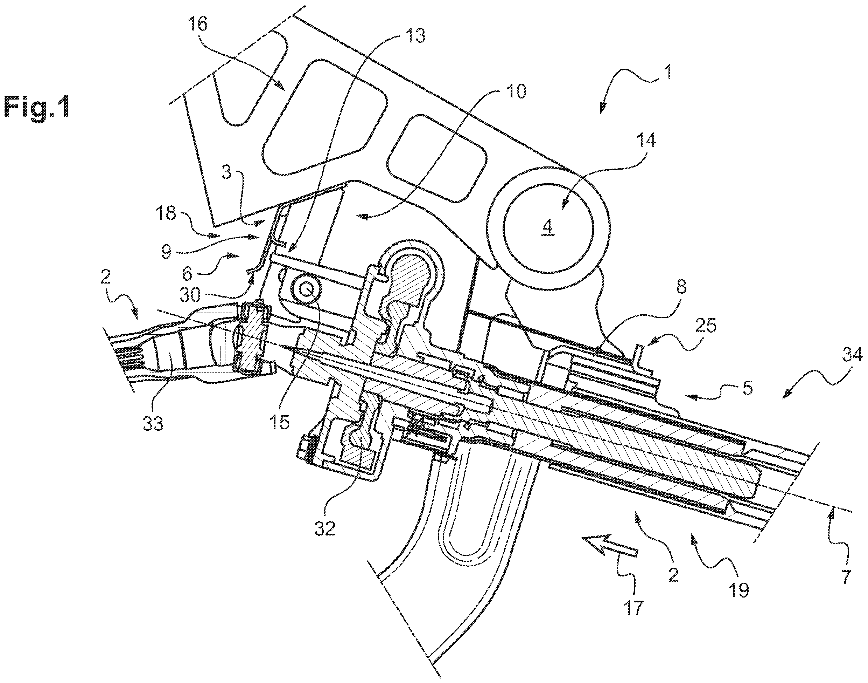

Tel qu'illustré sur la figure 1, un ensemble 1 comprenant une colonne et un support de colonne, comprend une colonne 2 et un support colonne 3, le support colonne 3 permettant de maintenir la colonne 2 en position de pré montage par rapport à une traverse 4, qui est ici une traverse de poste de conduite automobile. Les positions relatives de la colonne et de la traverse décrites par la suite concernent des positions sur une chaîne de montage, l'assemblage de la colonne sur la traverse pouvant se faire hors du véhicule. Pour simplifier la description, certaines directions sont cependant décrites par rapport aux directions finales de la colonne et de la traverse dans le véhicule, car la position de la traverse est généralement prévue de manière univoque par rapport à la caisse du ou des véhicules au(x)quels elle est destinée.

Dans l'exemple illustré, la traverse 4 comprend une portion principale de traverse 14 aussi appelée tube conducteur de la traverse, et s'étendant traversalement au véhicule en position finale assemblée sur le véhicule. La traverse 4 comprend également, s'étendant vers l'avant du véhicule, un tirant 16, généralement désigné « tirant inférieur de baie », sensiblement perpendiculaire à la portion principale 14 de traverse.

La colonne de direction 2 est montée de manière à ce qu'une première portion 34 de colonne soit sensiblement perpendiculaire au tube conducteur 14, cette première portion 34 étant une portion soutenue par le support 3. Par sensiblement perpendiculaire, on entend ici que l'axe de rotation transmettant le couple dans cette première portion de la colonne, forme un angle par exemple compris entre 70° et 110° avec la portion de tube conducteur portant une portion du support 3. La première portion de la colonne 2, qui est soutenue par le support 3, comprend des arbres mobiles autour d'un axe 7. Cet axe 7 représente l'axe de rotation de la première portion de la colonne 2 et représente ici également l'axe de rotation du volant du véhicule. On peut également, en première approximation considérer que cet axe 7 correspond sensiblement à un axe d'inertie de la première portion de colonne de direction.

Le support 3 comprend une première portion de support, ou portion de support de suspension, assemblée au niveau de la portion tube conducteur de la traverse 4, et comprend une deuxième portion de support, ou portion de support d'extrémité, assemblée en arrière du tube conducteur sur le tirant 16. La portion de support d'extrémité comprend un premier élément de support d'extrémité 21 solidaire de la colonne 2, et comprend un deuxième élément de support d'extrémité 22 solidaire de la traverse 4, ici solidaire du tirant 16 de la traverse. La portion de support de suspension comprend un premier élément de support de suspension 23 solidaire de la colonne et comprend un deuxième élément de support de suspension 24 solidaire de la traverse 4, ici assemblé à proximité du tube conducteur 14. On peut envisager des variantes de réalisation (non représentées) dans lesquelles des éléments du support sont assemblés en d'autres endroits de la traverse ou plus généralement d'un bâti.

Dans l'exemple illustré, la colonne 2 comprend un moteur d'assistance à la direction 32, mais on peut envisager des variantes de réalisation sans moteur d'assistance. On notera cependant que la présence du moteur d'assistance 32 alourdit la colonne, car il déplace le centre de gravité en arrière par rapport au tube conducteur 4 et par rapport à la première portion de support, comparé à la position du centre de gravité d'une colonne de direction sans moteur d'assistance. Cet alourdissement et ce déplacement du centre de gravité ajoutent encore à la difficulté du positionnement de la colonne 2 par rapport à la deuxième portion de support située en arrière du tube conducteur 4, et à la nécessité de définir un procédé de montage limitant les tâtonnements de l'opérateur.

Dans l'exemple illustré, la colonne 2 comprend une portion intermédiaire 33 entre la première portion 34 de colonne et le différentiel menant aux roues du véhicule, cette portion intermédiaire 33 de colonne comprenant un arbre destiné à tourner autour d'un axe formant un angle avec l'axe 7 de la première portion 34 de colonne.

Pour en revenir au support 3 illustré sur les figures 1 à 3, la portion de suspension du support 3, ici assemblée à la portion principale transversale de traverse 14, comprend un dispositif 5 de type glissière permettant de suspendre la colonne à la traverse, tout en autorisant divers mouvements de la colonne par rapport à la traverse, notamment des déplacements suivant au moins une direction de translation comprise dans le plan de la figure (autrement dit, en position de montage final, comprise dans un plan vertical comprenant la direction d'avancement du véhicule) et permettant également d'incliner la colonne par rapport à un axe horizontal transversal YY' du véhicule.

Le dispositif de glissière 5 configuré pour suspendre la colonne sur la portion principale transversale de traversée 14 peut comprendre comme sur les figures 1 à 3, une glissière, par exemple réalisée sous la forme d'une fente 8 conformée dans une plaque allongée correspondant ici au deuxième élément de support de suspension 24, et comprendre également un élément 25 formant crochet, intégré au premier élément de support de suspension 23, et apte à coulisser dans la fente 8 tout en retenant le poids de la colonne en prenant appui sur les bords de la fente 8. L'élément 25 formant crochet peut typiquement avoir la forme générale d'un T dont la branche transversale destinée à s'appuyer sur les bords de la fente 8, est insérée au-delà de la fente par une lumière transversale 38 conformée à une extrémité de la fente 8. La fente 8 a une forme allongée s'étendant parallèlement à un plan vertical longitudinal du véhicule. La fente 8 débouche sur la lumière transversale 38. La branche transversale du "T" de d'élément 25 permet de soutenir le premier élément 23 de support de suspension en appui contre une face supérieure du deuxième élément de support de suspension 24. Le premier élément de support de suspension 23 peut par exemple comprendre une plaque métallique pliée de manière à former un profilé en « U », les branches du « U » étant assemblées de part et d'autre de la colonne et le fond du « U », tourné vers le haut, servant à la fois de point d'attache de la base de l'élément crochet une fois le crochet formé, et de zone de découpe pour former l'élément crochet au moment de la mise en forme du premier élément de support de suspension 23.

La colonne 2 comprend un corps, soutenu par le dispositif de glissière, et correspondant ici à la première portion 34 de colonne. La colonne 2 comprend également au moins une extrémité de centrage 18, appelée extrémité ainsi parce qu'elle peut se situer à proximité d'une extrémité d'une des portions de la colonne, sans pour autant correspondre systématiquement à une extrémité terminale de la colonne.

L'extrémité du centrage ne se trouve pas nécessairement au niveau d'une extrémité d'un des arbres de la colonne. Elle se trouve néanmoins à distance du premier élément de support de suspension 23 solidaire de la colonne.

Une fois la colonne accrochée à la traverse à l'aide de la première portion de support, un opérateur positionne le premier élément du support d'extrémité par rapport au deuxième élément de support d'extrémité de manière à ce que la portion se sussport de suspensionet la portion de support de retenue soient, ensemble, en mesure de soutenir le poids de la colonne, et de maintenir ensemble la colonne immobile par rapport à la traverse dans une position idoine pour assembler avec des moyens d'assemblages finaux la colonne à la traverse. Par moyens d'assemblage finaux on entend les moyens d'assemblage maintenant la colonne par rapport à la traverse lorsque le véhicule est assemblé, apte à rouler sur les routes. On pourrait cependant envisager des variantes de réalisation dans lesquelles la première et la deuxième portion de support maintiennent la colonne en position idoine, mais sans supporter tout le poids de la colonne, celle-ci étant par exemple en outre soutenue par un bras manipulateur pendant la mise en place des moyens d'assemblage finaux.

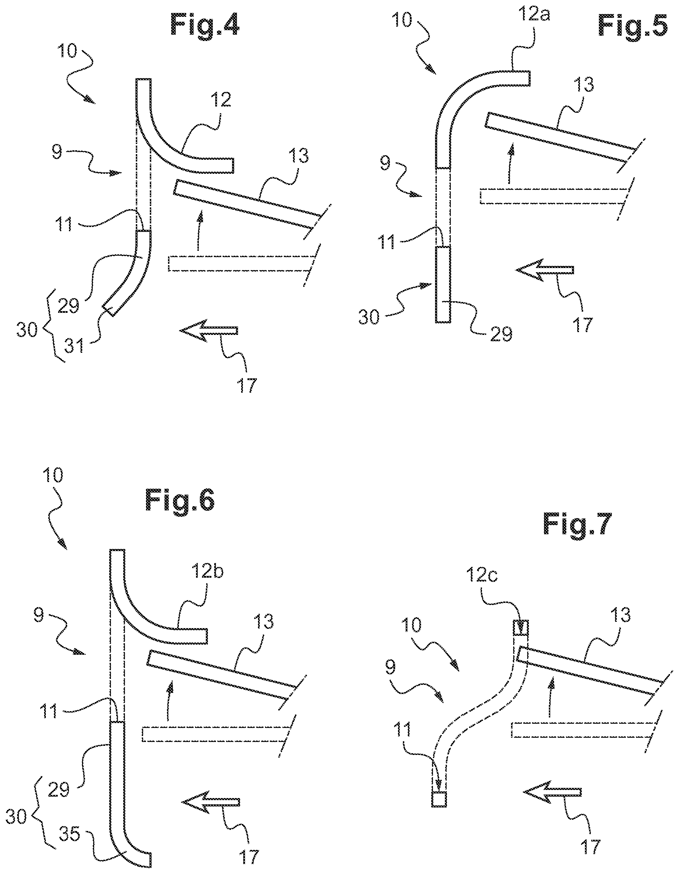

Concernant la portion de support d'extrémité, dont une première variante est illustrée en figures 1 à 4, et dont d'autres variantes sont illustrée de manière simplifiée, vues en coupe, sur les figures 5 à 7, l'un des éléments de support d'extrémité comprend un ergot 13, et l'autre des éléments de support d'extrémité comprend une ouverture 9 configurée pour recevoir l'ergot, inséré axialement dans cette ouverture, et reposant du fait du poids de la colonne, sur un bords d'appui 11 de l'ouverture. L'ouverture peut être par exemple ménagée dans une platine de retenue 10. L'ensemble ergot 13 et platine 10 forme ainsi un dispositif de retenue 6.

Dans l'exemple illustré sur les figures 1 à 4, le premier élément 21 de support d'extrémité est une pièce assemblée à la colonne et comprenant un ergot de centrage 13 dépassant par rapport à l'élément de support d'extrémité, de manière a pouvoir être inséré dans l'ouverture 9, sensiblement suivant une direction parallèle à la direction de la fente de glissière 8.

De manière avantageuse, la direction 17 d'insertion de l'ergot 13 peut se trouver dans un plan géométrique vertical qui comprend également la direction de la glissière 8 et/ou qui comprend également la direction de l'axe 7 de l'arbre de la première portion 34 de colonne.

Dans l'exemple illustré, la deuxième portion de support comprend, côté colonne, un ergot 13 et comprend, côté tirant de baie de la traverse, une platine de retenue 10 disposée de manière à définir une portion de plan sensiblement perpendiculaire à la direction de l'ergot, cette portion de plan étant traversée par une ouverture 9 dans laquelle doit être inséré l'ergot 13.

L'ouverture 9 est bordée d'un bord d'appui 11 sur lequel l'ergot vient en appui de manière à empêcher la rotation de la colonne une fois que l'ergot 13 est inséré dans l'ouverture 9.

Afin de guider l'opérateur dans le positionnement de l'ergot préalablement à son insertion au travers de l'ouverture, la platine 10 comprend un rebord de butée 12 du côté opposé au bord d'appui 11 par rapport à l'ouverture 9, et avançant en avant de l'ouverture 9 en direction de l'ergot. Ainsi lorsque l'opérateur incline la colonne en soulevant l'extrémité de centrage 18 de la première portion de colonne, l'ergot 13 passe devant l'ouverture 9 puis vient buter contre le rebord de butée 12. Dans les modes de réalisation illustrés en figures 1 à 4, l'ergot vient toucher le rebord de butée 12 alors que l'ergot, se trouve en face de l'ouverture 9 ;par « se trouve en face » on entend par exemple qu'un axe géométrique central de l'ergot peut être prolongé au travers de l'ouverture 9.

En outre, afin d'aider l'opérateur dans le positionnement axial de la colonne, la platine 10 comprend un rebord de butée axiale 30 s'étendant à partir du bord d'appui 11 sensiblement perpendiculairement à la direction 17 d'insertion de l'ergot.

Ainsi lorsque l'opérateur fait coulisser la colonne en direction de la platine 10, l'ergot 13 vient dans un premier temps buter contre le rebord 30 indiquant ainsi à l'opérateur que la bonne position axiale est atteinte, suite à quoi l'opérateur relève la portion de colonne située en arrière de la traverse 4, de manière à rapprocher l'ergot de l'ouverture 9. Au cours de ce mouvement d'inclinaison, l'ergot 13 vient butter contre le rebord de butée 12 de la platine 10. L'opérateur n'a alors plus qu'à faire coulisser la colonne 2 à l'aide de la glissière 8 de manière à amener l'ergot 13 dans l'ouverture 9. Il est en cela guidé par un contact glissant d'une face de l'ergot 13 contre le rebord de butée 12.

Dans l'exemple illustré, l'ergot est ménagé sur la colonne, et la platine comprenant l'ouverture est assemblée sur la traverse. On peut envisager des variantes de réalisation (non représentées) dans lesquelles l'élément de support assemblé à la traverse comprendrait un ergot, et dans lesquelles une platine avec une ouverture serait assemblée sur la colonne, de manière à ce qu'un rebord de butée de la platine vienne en butée contre l'ergot lorsque l'on relève la portion de colonne se trouvant en arrière de la portion de support de suspension. Typiquement, dans cette dernière configuration, le bord d'appui axial de la platine se trouverait alors au-dessus du rebord de butée angulaire, et le rebord de butée angulaire formerait une protubérance de la platine débordant vers l'avant du véhicule.

Dans l'un ou l'autre mode de réalisation, une fois l'ergot 13 inséré dans l'ouverture 9, l'opérateur peut lâcher la colonne qui reste suspendue au niveau de la première partie et de la seconde partie du support de pré montage. Des points de fixation plus solides peuvent alors être mis en place, tel que par exemple une fixation par un élément transversal 15 traversant à la fois une portion de la colonne 2 et une portion du support 3. La fixation par axe traversant transverse peut être configurée pour permettre d'incliner par la suite la colonne autour de cet axe transverse, l'inclinaison de la colonne pouvant être bloquée par un système à friction placé à distance de la fixation par axe transverse une fois l'inclinaison souhaitée de la colonne sélectionnée.

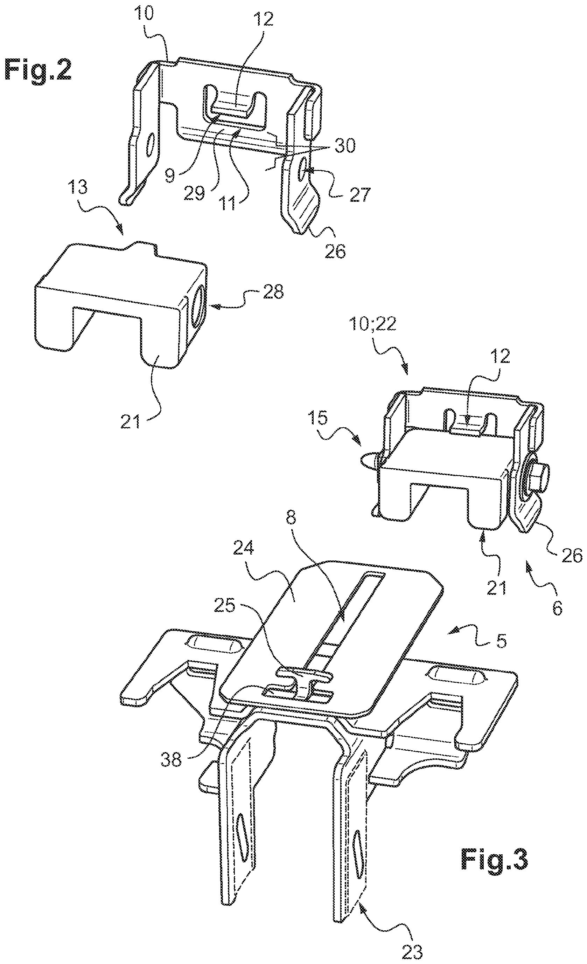

La platine 10 peut ainsi faire partie des moyens de fixation définitive de la colonne. Par exemple, tel qu'illustré sur les figures 2 et 3, la platine 10 peut comporter des rebords latéraux 26 traversés par des orifices transversaux 27, et le premier élément de support d'extrémité 21 comportant l'ergot et monté sur la colonne, peut être percé d'orifices transversaux 28 venant se placer dans l'alignement des orifices 27, une fois que l'ergot 13 est inséré dans l'ouverture 9. De cette manière, la colonne peut être fixée par un élément transverse 15 de fixation du type goupille ou vis, traversant à la fois les orifices 27 et 28.

Certains des points de fixation reliant sur le véhicule la colonne et la traverse peuvent être fusibles, de manière à éviter ou limiter le recul de la colonne en direction du conducteur en cas d'accident. Ces points de fixation fusibles peuvent par exemple êtres situés de part et d'autre de la glissière, et comprendre par exemple des goupilles traversant la plaque formant glissière Ainsi lorsque ces éléments de fixations sont brisés au moment d'un choc, la colonne peut avancer vers l'avant du véhicule tout en restant suspendue au niveau de la glissière qui a servi au préassemblage.

L'invention ne se limite pas aux exemples de réalisation décrits, et peut se décliner en de nombreuses variantes. Le dispositif de suspension peut comporter une glissière sans fente traversante, ou peut ne pas comporter de glissière. De préférence, une première portion du support est néanmoins configurée pour autoriser par rapport à la traverse des mouvements de la colonne combinant des mouvements de translation de la colonne et des mouvements d'inclinaison de l'axe de la colonne. La colonne à assembler peut être une colonne de transfert de couple ou de mouvement de rotation autre qu'une colonne de direction automobile. La traverse peut être remplacée par un élément de bâti de véhicule ou par un bâti fixe.

Le dispositif de retenue peut présenter de nombreuses autres configurations que celles illustrés sur les figures 1 à 4. Ainsi, les figures 4, 5, 6 et 7 illustrent sous forme de vues en coupes simplifiées, différents exemples, non limitatifs, de géométries envisageables pour le dispositif de retenue. Dans chacun de ces exemples, l'ergot de centrage 13 se trouve sur la colonne. Sur ces mêmes exemples, la platine de retenue 10 comportant une ouverture 9 destinée à recevoir l'ergot 13, fait partie d'un support assemblé directement ou indirectement sur la traverse. Comme mentionné précédemment, on pourrait pour chacune de ces géométries, envisager une platine fixée sur la colonne, l'ouverture de la platine venant s'emboîter autour d'un ergot solidaire de la traverse. On retrouve sur les figures 4 à 7 quelques éléments communs aux figures précédentes, les mêmes éléments étant désignés par les mêmes références. Dans l'exemple illustré en figure 4, la platine de retenue 10 comporte un rebord de butée 12 similaire à celui illustré sur les figures 1 à 3, c'est-à-dire un rebord de butée s'étendant en avant de l'ouverture 9 à la rencontre de l'ergot 13, de manière à présenter une surface de contact courbe convexe dans la zone de rencontre probable entre l'ergot 13 et le rebord de butée 12. Cette surface courbe convexe permet de limiter en surface la zone de contact entre l'ergot et le rebord de butée, et de faciliter le guidage de l'ergot en direction de l'intérieur de l'ouverture, puisque les forces de frottement entre l'ergot et le rebord de butée sont ainsi réduites.

Dans l'exemple illustré en figure 4, la platine 10 comprend, outre le premier rebord 12 de butée angulaire, un deuxième rebord 30 de butée axiale. Le deuxième rebord 30 est similaire au deuxième rebord de butée axiale des platines illustrées en figure 1 à 3, c'est-à-dire qu'il comporte une première portion transversale 29 s'étendant à partir du bord d'appui 11 autour de l'ouverture 9, cette première portion transversale étant sensiblement perpendiculaire à la direction d'insertion 17 de l'ergot 13. Cette première portion transversale 29 permet à l'opérateur de repérer la position axiale dans laquelle il doit amener la colonne et à partir de laquelle il doit ensuite faire s'incliner la colonne pour remonter l'ergot 13 en direction du rebord de butée 12. Dans l'exemple illustré en figure 4, le deuxième rebord de butée axiale se poursuit dans la direction d'éloignement de l'ouverture 9, c'est-à-dire ici, vers le bas, par une deuxième portion oblique 31 inclinée par rapport à la première portion transversale 29 et inclinée par rapport à la direction d'insertion 17. La deuxième portion oblique 31 permet de guider l'ergot 13 qui viendrait buter un peu trop bas sur la platine 10, même si l'ergot dépasse la position axiale de la première portion transversale 29.

Dans l'exemple illustré en figure 5, la platine 10 comprend un rebord de butée 12a qui présente au contraire une surface concave en regard de la zone d'accostage probable de l'ergot 13. Cette surface concave permet de guider l'ergot au contact du rebord de butée 12a jusqu'à l'ouverture 9 suivant un trajet continu et intuitif, et offre un plus grande latitude de débattement angulaire à l'ergot 13 au voisinage de l'ouverture 9. Dans l'exemple illustré en figure 5, le deuxième rebord de butée axial est simplement perpendiculaire à la direction d'insertion 17 de l'ergot 13, sans portion oblique à distance de l'ouverture.

Dans l'exemple illustré en figure 6, la platine de retenue 10 comporte un rebord de butée 12b s'étendant perpendiculairement à la platine et parallèlement à la direction d'insertion 17, en direction de l'ergot 13. Dans ce mode de réalisation, la mise en contact de l'ergot 13 et du rebord de butée 12b peut permettre à l'opérateur non seulement de repérer que l'ergot est en bonne position pour glisser en direction de l'ouverture 9, mais cette mise en contact peut en outre lui permettre d'estimer avec plus de précision l'orientation de la colonne par rapport à la direction d'insertion.

Dans l'exemple illustré en figure 6, le deuxième rebord de butée axiale 30 comporte une première portion transversale 29 et comporte sur un bord extérieur de cette portion transversale 29, à distance de l'ouverture 9, un rebord 35 orienté de manière à avancer à la rencontre de l'ergot 13 suivant la direction d'insertion 17. Ce rebord 35 se situe à une distance telle du bord d'appui 11, qu'il permet un large débattement angulaire de la colonne, entre une position d'appui de l'ergot 13 sur le rebord de butée 12 et une position d'appui sur le rebord 35. Le rebord 35 peut éventuellement temporairement soutenir le poids de la colonne lors de la préparation de la colonne en vue de l'insertion de l'ergot dans l'ouverture.

De préférence, dans la mesure où le deuxième rebord 30 de butée axiale comporte un retour 35 avançant vers l'ergot 13, ce retour 35 est positionné de manière à ce que le débattement angulaire que l'on peut ainsi imposer à l'ergot 13 entre le bord d'appui 11, et une position d'appui de l'ergot 13 sur le retour 35, est supérieure au débattement angulaire de l'ergot entre le bord d'appui 11 et la position d'appui sur le rebord de butée 12.

De cette manière, l'opérateur dispose d'une bonne liberté de mouvement de la colonne, en termes de débattement angulaire d'inclinaison, tout en étant guidé pour le repérage de la position idoine pour insérer l'ergot 13 dans l'ouverture 9.

Dans l'exemple illustré en figure 7, la platine 10 définit une ouverture 9 dont le plan moyen est incliné autour d'un axe horizontal, par rapport au plan normal à la direction d'insertion 17. La platine 10 comprend ici un rebord de butée 12c qui se trouve en avant du bord d'appui 11, toujours en raisonnant par rapport à la direction d'insertion 17, sans cependant être débordant par rapport au contour de l'ouverture 9. L'ergot 13 peut néanmoins, comme dans les exemples de réalisation précédents, venir en butée contre le rebord de butée 12c au moment où l'opérateur bascule la colonne en remontant l'extrémité de la colonne comportant l'ergot 13.

Nota Bene : les variantes de réalisation des rebords de butée et des deuxièmes rebords de butée axiale illustrés sur les figures 4 à 7, sur une même figure, sont à chaque fois indépendantes entre le haut et le bas de la figure, c'est-à-dire que l'on pourrait très bien prendre la géométrie d'un rebord de butée angulaire d'une de ces figures et la combiner avec la géométrie d'un deuxième rebord de butée axiale d'une autre parmi les figures 4 à 7.

De nombreuses autres variantes sont bien sûr envisageables, qui ne sont pas détaillées ici, le principe restant de disposer d'un rebord de butée angulaire sur la colonne ou sur la traverse, d'un ergot, sur l'autre parmi la colonne et la traverse, et d'une liberté de débattement angulaire de la colonne en-dessous de la position de contact entre l'ergot et rebord de butée angulaire, permettant une phase d'approche de la colonne par rapport à l'ouverture 9.

Le procédé de montage de colonne permet, moyennant quelques modifications bien choisies de pièces pour certaines déjà connues, de faciliter le pré-positionnement de colonne de direction lors du montage de celle-ci, en limitant le temps et les efforts nécessaires pour faire parvenir la colonne à sa position d'assemblage souhaitée. Ce pré positionnement est d'autant plus important que les colonnes de direction deviennent par construction de plus en plus massives.

## Revendications

1. Ensemble (1) de colonne (2) de direction de véhicule automobile, et de support colonne (3), ledit support (3) étant configuré pour être assemblé à une traverse (4) et comprenant un dispositif de glissière (5) et un dispositif de retenue (6) situé à distance du dispositif de glissière (5), la colonne comprenant un corps (19) et une extrémité de centrage (18), l'ensemble comprenant :
- un dispositif de suspension (25) configuré pour suspendre la colonne (2) à une glissière (8) du dispositif de glissière (5) de manière à pouvoir incliner l'axe (7) de la colonne autour d'un axe (YY') horizontal transversal au véhicule,
- une ouverture (9) sur le dispositif de retenue (6), configurée pour y insérer, sensiblement suivant la direction de la glissière, une portion de l'extrémité de centrage (18) de la colonne (2), l'ouverture étant limitée d'un premier côté par un bord d'appui (11) configuré pour soutenir une partie du poids de la colonne (2) et retenir la colonne dans une première position d'inclinaison, une fois la portion d'extrémité de centrage (18) insérée dans l'ouverture (9), le dispositif de retenue (6) comprend sur un second côté de l'ouverture (9) diamétralement opposé au premier côté, un rebord de butée (12) s'étendant en avant de l'ouverture (9) en direction de la glissière (8), de manière à former une butée pour l'extrémité de centrage (18) lors de variations d'inclinaison de la colonne (2) **caractérisé en ce que** la colonne (2) est suspendue par le dispositif de glissière (5), autour d'un axe (YY') horizontal transversal au véhicule, avant l'insertion de la portion d'extrémité de centrage (18) dans l'ouverture (9), l'extrémité de centrage (18) de la colonne comprenant un ergot (13), l'ensemble étant configuré de manière à ce que, pour au moins une position de butée angulaire de l'ergot (13) contre le rebord de butée (12), l'ergot se trouve dans l'alignement de l'ouverture (9) suivant la direction de la glissière (8), la direction (17) d'insertion de l'ergot (13) se trouvant dans un plan géométrique vertical qui comprend également la direction de la glissière (8) et qui comprend également la direction de l'axe (7) de la colonne (2) de direction.

2. Ensemble selon la revendication 2, configuré de manière à ce que pour toutes les positions suspendues de la colonne (2) dans lesquelles l'ergot (13) est en butée angulaire contre le rebord de butée (12), au moins une portion de l'ergot (13) se trouve dans l'alignement de l'ouverture (9) suivant la direction de la glissière (8).

3. Ensemble selon l'une quelconque des revendications 1 à 3, dans lequel l'extrémité de centrage (18) de la colonne comprend un ergot (13), l'ensemble étant configuré de manière à ce que, pour toutes les positions de la colonne (2) dans lesquelles l'ergot (13) se trouve en butée angulaire contre le rebord de butée (12), le rebord de butée (12) comporte une portion de surface entre la zone de butée et l'ouverture (9), apte à guider l'ergot (13) vers l'ouverture (9) suivant une trajectoire plane et se rapprochant continûment de l'ouverture (9) suivant la direction de la glissière (8).

4. Ensemble selon l'une quelconque des revendications précédentes, dans lequel l'ouverture (9) comporte un deuxième rebord (30) s'étendant radialement à l'extérieur du bord d'appui, le deuxième rebord présentant une direction perpendiculaire ou transversale à la direction de la glissière (8).

5. Ensemble selon la revendication 5, dans lequel le deuxième rebord (30) s'étend à partir du bord d'appui, dans une portion de plan sensiblement perpendiculaire à la direction de la glissière (8).

6. Ensemble selon la revendication 5, dans lequel, à partir du bord d'appui (11), le deuxième rebord (30) s'étend d'abord dans un plan sensiblement perpendiculaire (29) à la direction de la glissière, puis s'étend suivant une direction de plan (31) inclinée vers l'arrière dans le sens d'insertion de l'ergot (13).

7. Ensemble selon l'une quelconque des revendications précédentes, dans lequel la glissière (8) est ménagée sur l'un parmi le support (3) et la colonne (2), et le dispositif de glissière (5) comporte un élément d'accrochage (25) complémentaire de la glissière (8), sur l'autre parmi le support et la colonne, l'élément d'accrochage (25) étant configuré pour pouvoir pivoter au niveau de son contact avec les bords de la fente, autour d'un axe horizontal perpendiculaire à la glissière (8).

8. Ensemble selon la revendication 8, dans lequel la glissière (8) comporte une zone d'insertion élargie permettant d'y introduire verticalement l'élément d'accrochage (25) à partir d'une position où la colonne (2) est indépendante du support (3), et comporte une butée de fin de course configurée pour limiter les mouvements de translation de la colonne (2) dans la direction de rapprochement de l'extrémité de centrage (18) vers le dispositif de retenue (6).

9. Procédé d'assemblage d'une colonne (2) de direction sur un support (3), la colonne (2) comprenant un corps (19) et une extrémité de centrage (18), le support (3) comprenant un dispositif de glissière (5) sensiblement horizontale, et un dispositif de retenue (6) distant du dispositif de glissière (5), le procédé d'assemblage comprenant les étapes suivantes :
- on accroche la colonne (2) au support (3) par le dispositif de glissière (5), de manière à ce que la mobilité de la colonne suspendue autorise une translation de la colonne (2) par rapport au support (3), et autorise une inclinaison de la colonne (2) autour d'un axe horizontal (YY') perpendiculaire à la direction de la glissière (8),
- on incline la colonne (2) en soulevant l'extrémité de centrage (18) de la colonne, jusqu'à ce que l'extrémité de centrage (18) de la colonne vienne angulairement en butée avec une avancée (12) du dispositif de retenue (6),
- à partir de la position précédente de butée angulaire, on imprime une translation à la colonne (2) le long de la glissière (8) en maintenant un contact glissant entre l'extrémité de centrage (18) de la colonne et l'avancée du dispositif de retenue (12), jusqu'à ce qu'un ergot (13) de l'extrémité de centrage (18) de la colonne soit insérée dans une ouverture (9) du dispositif de retenue (6),
- on pose sous l'effet du poids de la colonne (2) l'extrémité de centrage de la colonne sur un bord d'appui (11) de l'ouverture (9)
- on fixe par un élément transversal (15) traversant à la fois une portion de la colonne (2) et une portion du support (3).

## Patentansprüche

1. Baugruppe (1) aus einer Kraftfahrzeuglenksäule (2) und einer Säulenhalterung (3), wobei die Halterung (3) dazu ausgelegt ist, an einem Querträger (4) montiert zu sein, und eine Gleitvorrichtung (5) und eine Haltevorrichtung (6) umfasst, die von der Gleitvorrichtung (5) beabstandet angeordnet ist, wobei die Säule einen Körper (19) und ein Zentrierende (18) umfasst, wobei die Baugruppe Folgendes umfasst:
- eine Aufhängevorrichtung (25), die dazu ausgelegt ist, die Säule (2) an einer Schiene (8) der Gleitvorrichtung (5) aufzuhängen, um die Achse (7) der Säule um eine horizontale Achse (YY') quer zum Fahrzeug neigen zu können,
- eine Öffnung (9) an der Haltevorrichtung (6), die dazu ausgelegt ist, dort einen Abschnitt des Zentrierendes (18) im Wesentlichen in Richtung der Gleitschiene der Säule (2) einzuführen, wobei die Öffnung auf einer ersten Seite durch eine Stützkante (11) begrenzt ist, die dazu ausgelegt ist, einen Teil des Gewichts der Säule (2) zu stützen und die Säule in einer ersten Neigungsposition zu halten, nachdem der Abschnitt des Zentrierendes (18) in die Öffnung (9) eingeführt wurde,
wobei die Haltevorrichtung (6) auf einer der ersten Seite diametral gegenüberliegenden zweiten Seiten der Öffnung (9) eine Anschlagkante (12) umfasst, die sich vor der Öffnung (9) in Richtung der Gleitschiene (8) erstreckt, um bei Neigungsänderungen der Säule (2) einen Anschlag für das Zentrierende (18) zu bilden,
**dadurch gekennzeichnet, dass** die Säule (2) durch die Gleitvorrichtung (5) um eine horizontale Achse (YY') quer zum Fahrzeug aufgehängt wird, bevor der Abschnitt des Zentrierendes (18) in die Öffnung (9) eingeführt wird, wobei das Zentrierende (18) der Säule einen Ansatz (13) umfasst, wobei die Baugruppe so gestaltet ist, dass für mindestens eine Winkelanschlagsposition des Ansatzes (13) gegen die Anschlagkante (12) der Ansatz in der Ausrichtung der Öffnung (9) in Richtung der Gleitschiene (8) liegt, wobei die Einführrichtung (17) des Ansatzes (13) in einer vertikalen geometrischen Ebene liegt, die auch die Richtung der Gleitschiene (8) umfasst und die auch die Richtung der Achse (7) der Lenksäule (2) umfasst.

2. Baugruppe nach Anspruch 2, die so gestaltet ist, dass für alle Aufhängungspositionen der Säule (2), in denen sich der Ansatz (13) in einem Winkelanschlag gegen die Anschlagkante (12) befindet, mindestens ein Abschnitt des Ansatzes (13) in der Ausrichtung der Öffnung (9) in Richtung der Gleitschiene (8) liegt.

3. Baugruppe nach einem der Ansprüche 1 bis 3, wobei das Zentrierende (18) der Säule einen Ansatz (13) umfasst, wobei die Baugruppe so gestaltet ist, dass für alle Positionen der Säule (2), in denen sich der Ansatz (13) in einem Winkelanschlag gegen die Anschlagkante (12) befindet, die Anschlagkante (12) einen Oberflächenabschnitt zwischen dem Anschlagbereich und der Öffnung (9) aufweist, der dazu geeignet ist, den Ansatz (13) entlang einer ebenen Bahn zur Öffnung (9) hin zu führen und sich in Richtung der Gleitschiene (8) kontinuierlich der Öffnung (9) anzunähern.

4. Baugruppe nach einem der vorangehenden Ansprüche, wobei die Öffnung (9) eine zweite Kante (30) aufweist, die sich radial außerhalb der Stützkante erstreckt, wobei die zweite Kante eine zur Richtung der Gleitschiene (8) senkrecht oder quer verlaufende Richtung aufweist.

5. Baugruppe nach Anspruch 5, wobei sich die zweite Kante (30) von einer Auflagekante ausgehend in einem Abschnitt einer zur Richtung der Gleitschiene (8) in einer im Wesentlichen senkrecht verlaufenden Ebene erstreckt.

6. Baugruppe nach Anspruch 5, wobei sich die zweite Kante (30) von der Stützkante (11) ausgehend zunächst in einer sich zur Richtung der Gleitschiene im Wesentlichen senkrecht erstreckenden Richtung (29) erstreckt und sich anschließend in Richtung einer Ebene (31) erstreckt, die in der Einführrichtung des Ansatzes (13) nach hinten geneigt ist.

7. Baugruppe nach einem der vorangehenden Ansprüche, wobei die Gleitschiene (8) an einer der Halterung (3) und der Säule (2) vorgesehen ist, und die Gleitvorrichtung (5) ein zur Gleitschiene (8) komplementäres Hakenelement (25) an der anderen der Halterung und der Säule aufweist, wobei das Hakenelement (25) so gestaltet ist, dass es sich im Bereich seines Kontakts mit den Kanten des Schlitzes um eine horizontale Achse senkrecht zur Gleitschiene (8) drehen kann.

8. Baugruppe nach Anspruch 8, wobei die Gleitschiene (8) einen erweiterten Einführungsbereich aufweist, der das vertikale Einführen des Hakenelements (25) aus einer Position, in der die Säule (2) von der Halterung (3) unabhängig ist, ermöglicht, und einen Endanschlag aufweist, der dazu ausgelegt ist, die Translationsbewegungen der Säule (2) in Richtung der Annäherung des Zentrierendes (18) an die Haltevorrichtung (6) zu begrenzen.

9. Verfahren zur Montage einer Lenksäule (2) an einer Halterung (3), wobei die Säule (2) einen Körper (19) und ein Zentrierende (18) umfasst, wobei die Halterung (3) eine im Wesentlichen horizontale Gleitvorrichtung (5) und eine von der Gleitvorrichtung (5) beabstandete Haltevorrichtung (6) umfasst, wobei das Montageverfahren die folgenden Schritte umfasst:
- Anbringen der Säule (2) durch die Gleitvorrichtung (5) an der Halterung (3), sodass die Beweglichkeit der aufgehängten Säule eine Translation der Säule (2) in Bezug auf die Halterung (3) zulässt und eine Neigung der Säule (2) um eine horizontale Achse (YY') senkrecht zur Richtung der Gleitschiene (8) zulässt,
- Neigen der Säule (2) durch Anheben des Zentrierendes (18) der Säule, bis sich das Zentrierende (18) der Säule in einem Winkelanschlag mit einem Vorsprung (12) der Haltevorrichtung (6) befindet,
- von der vorherigen Winkelanschlagsposition ausgehend Verschieben der Säule (2) entlang der Gleitschiene (8), wobei ein Gleitkontakt zwischen dem Zentrierende (18) der Säule und dem Vorsprung der Haltevorrichtung (12) aufrechterhalten wird, bis ein Ansatz (13) des Zentrierendes (18) der Säule in eine Öffnung (9) der Haltevorrichtung (6) eingeführt ist,
- Positionieren des Zentrierendes der Säule auf einer Auflagekante (11) der Öffnung (9) unter der Wirkung des Gewichts der Säule (2),
- Befestigen durch ein Querelement (15), das sowohl durch einen Abschnitt der Säule (2) als auch einen Abschnitt der Halterung (3) verläuft.

## Claims

1. Assembly (1) of a motor vehicle steering column (2) and of a column support (3), said support (3) being configured to be fitted to a crossmember (4) and comprising a guideway device (5) and a holding device (6) situated at a distance from the guideway device (5), the column comprising a body (19) and a centring end (18), the assembly comprising:
- a suspension device (25) configured for suspending the column (2) from a guideway (8) of the guideway device (5) such that it is possible to incline the axis (7) of the column about a horizontal axis (YY') that is transverse to the vehicle,
- an opening (9) in the holding device (6), said opening being configured to have a portion of the centring end (18) of the column (2) inserted into it, substantially along the direction of the guideway, the opening being delimited on a first side by a bearing edge (11) configured to support a part of the weight of the column (2) and to hold the column in a first inclined position, once the portion of the centring end (18) has been inserted into the opening (9),
the holding device (6) comprising, on a second side of the opening (9) diametrically opposite to the first side, a stop lip (12) extending forward of the opening (9) in the direction of the guideway (8) so as to form a stop for the centring end (18) during variations in the inclination of the column (2), **characterized in that** the column (2) is suspended by the guideway device (5), about a horizontal axis (YY') that is transverse to the vehicle, before the portion of the centring end (18) is inserted into the opening (9), the centring end (18) of the column comprising a protrusion (13), the assembly being configured such that, for at least one angular abutment position of the protrusion (13) against the stop lip (12), the protrusion lies in line with the opening (9) along the direction of the guideway (8), the insertion direction (17) of the protrusion (13) lying in a vertical geometric plane which also includes the direction of the guideway (8) and which also comprises the direction of the axis (7) of the steering column (2).

2. Assembly according to Claim 2, which is configured such that, for all the suspended positions of the column (2) in which the protrusion (13) is in angular abutment against the stop lip (12), at least one portion of the protrusion (13) lies in line with the opening (9) along the direction of the guideway (8).

3. Assembly according to any one of Claims 1 to 3, wherein the centring end (18) of the column comprises a protrusion (13), the assembly being configured such that, for all the positions of the column (2) in which the protrusion (13) is in angular abutment against the stop lip (12), the stop lip (12) has a surface portion between the abutment zone and the opening (9), which is able to guide the protrusion (13) towards the opening (9) along a planar trajectory becoming ever closer to the opening (9) along the direction of the guideway (8).

4. Assembly according to any one of the preceding claims, wherein the opening (9) has a second lip (30) extending radially on the outside of the bearing edge, the second lip exhibiting a direction perpendicular or transverse to the direction of the guideway (8).

5. Assembly according to Claim 5, wherein the second lip (30) extends from the bearing edge, in a plane portion substantially perpendicular to the direction of the guideway (8).

6. Assembly according to Claim 5, wherein, starting from the bearing edge (11), the second lip (30) extends first of all in a plane (29) substantially perpendicular to the direction of the guideway, and then extends along a plane direction (31) that is inclined towards the rear in the sense of insertion of the protrusion (13).

7. Assembly according to any one of the preceding claims, wherein the guideway (8) is formed in one of the support (3) and the column (2), and the guideway device (5) has a coupling element (25), complementary to the guideway (8), on the other of the support and the column, the coupling element (25) being configured to be able to pivot in the region of its contact with the edges of the slot, about a horizontal axis perpendicular to the guideway (8).

8. Assembly according to Claim 8, wherein the guideway (8) has a widened insertion zone that makes it possible to vertically introduce the coupling element (25) into it starting from a position in which the column (2) is independent of the support (3), and has an end-of-travel stop configured to limit the movements in translation of the column (2) in the direction in which the centring end (18) becomes closer to the holding device (6).

9. Method for fitting a steering column (2) on a support (3), the column (2) comprising a body (19) and a centring end (18), the support (3) comprising a substantially horizontal guideway device (5), and a holding device (6) at a distance from the guideway device (5), the fitting method comprising the following steps:
- the column (2) is coupled to the support (3) by way of the guideway device (5) such that the mobility of the suspended column allows the column (2) to be moved in translation with respect to the support (3), and allows the column (2) to be inclined about a horizontal axis (YY') perpendicular to the direction of the guideway (8),
- the column (2) is inclined by lifting the centring end (18) of the column until the centring end (18) of the column passes angularly into abutment against an extension (12) of the holding device (6),
- starting from the above angular abutment position, the column (2) is made to move in translation along the guideway (8), maintaining sliding contact between the centring end (18) of the column and the extension (12) of the holding device, until a protrusion (13) of the centring end (18) of the column is inserted into an opening (9) in the holding device (6),
- under the effect of the weight of the column (2), the centring end of the column is positioned on a bearing edge (11) of the opening (9),
- fastening is effected by way of a transverse element (15) that passes through both a portion of the column (2) and a portion of the support (3).
